# NEUE EUROPÄISCHE PATENTSCHRIFT

(11) **EP 0 522 390 B2**
(45) Veröffentlichungstag und Bekanntmachung des Hinweises auf die Entscheidung über den Einspruch: **01.09.1999**
(45) Hinweis auf die Patenterteilung: 15.11.1995
(21) Anmeldenummer: 92110940.1
(22) Anmeldetag: 29.06.1992
(51) Int. Cl.: B29C 47/64, B29B 7/48

(54) **Doppelschneckenextruder**
Twin screw extruder
Boudineuse à deux vis

(30) Priorität: 11.07.1991 DE 4122912
(43) Veröffentlichungstag der Anmeldung: 13.01.1993
(73) Patentinhaber: FRIEDRICH THEYSOHN GmbH, D-30853 Langenhagen (DE)
(72) Erfinder: Nogossek, Alfred, W-3320 Salzgitter 1 (DE)
(74) Vertreter: Döring, Roger, Dipl.-Ing.

(56) Entgegenhaltungen:
- EP-A- 0 422 272
- DE-A- 3 430 885
- DE-A- 3 841 729
- FR-A- 1 559 048
- FR-A- 2 342 152
- FR-A- 2 635 044
- GB-A- 1 110 881
- GB-A- 1 126 144

## Beschreibung

Die Erfindung bezieht sich auf einen Doppelschneckenextruder mit zwei in einem Schneckengehäuse angeordneten, gleichsinnig drehenden Schnecken, bei welchem im Verlauf beider Schnecken jeweils an der gleichen axialen Stelle mindestens ein aus mindestens drei in Umfangsrichtung gegeneinander versetzten Polygonscheiben bestehender Knetblock angebracht ist, dessen Polygonscheiben an zwei einander diametral gegenüberliegenden Positionen mit einem dem Innendurchmesser des Schneckengehäuses entsprechenden Durchmesser Dichtflächen aufweisen, die sich in Umfangsrichtung der Polygonscheiben erstrecken und durch zur Achsrichtung der Schnecken parallele Linien begrenzt sind, und bei welchem die Durchlaßöffnung zwischen zwei Polygonscheiben der kämmenden Knetblöcke durch einen Werkstoffabtrag an mindestens einer der Polygonscheiben mit dadurch bedingter Verkleinerung der Oberfläche der jeweiligen Dichtfläche vergrößert ist (EP-A-0 422 272).

Derartige Doppelschneckenextruder oder auch Compoundiermaschinen werden zum Kneten und Mischen von Kunststoffen verwendet. Die eingesetzten Schnecken sind in Anpassung an die Art des Ausgangsmaterials, das beispielsweise zähflüssig, plastisch, pulverförmig oder körnig sein kann, unterschiedlich dimensioniert und aufgebaut. Wesentlich für die Arbeitsweise der Doppelschneckenextruder und für die Qualität des ausgestoßenen Materials sind u. a. eine gute Durchmischung und ein geringer thermischer Abbau desselben während der Förderung durch das Schneckengehäuse.

Aus der DE-C-3 841 729 geht ein Doppelschneckenextruder zum Entgasen von thermoplastischen Kunststoffschmelzen hervor. Im Entgasungsbereich dieses Doppelschneckenextruders sind im Verlauf der beiden Schnecken in gleicher Höhe jeweils mehrere Scheiben angebracht, die durch Distanzstücke voneinander getrennt sind. Die Scheiben der einen Schnecke liegen jeweils in gleicher Höhe wie die Distanzstücke der anderen Schnecke. Sie können rund oder eckig ausgeführt sein. Die zu entgasende Schmelze wird nach Art eines Pilgerschrittverfahrens über die einzelnen Scheiben geleitet. Sie verweilt dadurch länger im Entgasungsbereich, was zu einer verbesserten Entgasung führt.

Die FR-A-1 559 048 beschreibt einen Doppelschneckenextruder, bei dem beide Schnecken zum Homogenisieren und Entgasen einer Schmelze mit Scheiben ausgerüstet sind, die an ihren Umfangsflächen Rippen haben. Jede der Scheiben hat mindestens zwei in Umfangsrichtung gegeneinander versetzte Rippen, die nahezu am Gehäuse des Doppelschneckenextruder anliegen. Eine der Rippen verläuft in axialer Richtung und die andere unter einem spitzen Winkel schräg dazu. Durch die schrägen Rippen wird die Schmelze in axialer Richtung bewegt. Die in axialer Richtung verlaufenden Rippen haben nur eine Knetfunktion. Je eine schräge Rippe der einen Scheibe arbeitet in diesem Sinne mit einer axial verlaufenden Rippe einer benachbarten Scheibe zusammen.

Die Schnecken des Doppelschneckenextruders nach der DE-C-813 154 weisen in ihrem axialen Verlauf Knetblöcke auf, durch welche eine verbesserte Mischung des Materials im Schneckengehäuse erreicht werden soll. Die Knetblöcke bestehen aus mehreren, in axialer Richtung nebeneinander und in Umfangsrichtung gegeneinander versetzten Polygonscheiben (Kurvenscheiben). Sie wirken auf das zu fördernde Material wie Engpässe, durch die das Material hindurchgedrückt wird. Die Polygonscheiben reichen mit ihren größten Abmessungen an zwei einander diametral gegenüberliegenden Stellen bis dicht an die Oberfläche des Schneckengehäuses heran. Im Bereich der hier gegebenen Dichtflächen der Polygonscheiben kann das zu fördernde Material nicht hindurchtreten. Das gilt auch an den Stellen, an denen die Dichtflächen der Polygonscheiben eines Knetblocks bis dicht an die Polygonscheiben des Knetblocks der anderen Schnecke heranragen. Der bei den Knetblöcken dieses bekannten Doppelschneckenextruders verbleibende freie Durchtrittsquerschnitt ist daher sehr klein. Es treten daher Scherspitzen auf, die zu einer hohen Erwärmung des zu fördernden Materials und zu einem dadurch bedingten thermischen Abbau desselben führen.

Aus der eingangs erwähnten EP-A-0 422 272 geht eine Misch- und Knetvorrichtung hervor, die jeweils zwei, an Schnecken angebrachte und miteinander kämmende Knetblöcke aufweist. Die Knetblöcke bestehen aus in Umfangsrichtung gegeneinander versetzten Polygonscheiben mit Dichtflächen, die in Montageposition nahe an einem die Knetblöcke umgebenden Gehäuse liegen. Zur Bildung einer vergrößerten Durchlaßöffnung zwischen zwei Polygonscheiben ist an wenigstens einer Polygonscheibe eine Kante der jeweiligen Dichtflächen durch Werkstoffabtrag angeschrägt. Dabei ist die jeweilige Dichtfläche in axialer Richtung verkürzt.

Der Erfindung liegt die Aufgabe zugrunde, den eingangs geschilderten Doppelschneckenextruder so weiterzubilden, daß bei verbesserter Durchmischung des zu fördernden Materials im Bereich der Knetblöcke störende Scherspitzen nicht auftreten können.

Diese Aufgabe wird gemaß der Erfindung dadurch gelöst, daß die quer zur Achsrichtung der Schnecken verlaufenden Kanten jeder der durch die zur Achsrichtung der Schnecken parallelen Linien begrenzten Dichtflächen bedingt durch den Wertstoffabtrag zumindest teilweise schräg zur Achse der Schnecken verlaufen, wobei die Dichtflächen sich jeweils von der zuströmungsseitigen Stirnfläche der Polygonscheiben bis zu deren abströmseitiger Stirnfläche erstrecken.

Bei dieser Ausbildung der Dichtflächen der Polygonscheiben bleibt die Stauwirkung der Knetblöcke erhalten. Ihr freier Durchtrittsquerschnitt wird aber so weit vergrößert, daß thermisch schädliche Scherspitzen deutlich reduziert werden, ohne daß es zu störenden Ablagerungen von zu förderndem Material kommt. Es ist dabei möglich, die Richtung der schrägen Kanten je nach Anforderungen unterschiedlich anzubringen. Wenn die schrägen Kanten in Förderrichtung verlaufen, ist die verminderte Scherung durch die geringere Bremswirkung sichergestellt. Bei in entgegengesetzter Richtung verlaufenden schrägen Kanten ergibt sich eine rückwärts gerichtete Bewegung im Bereich der Knetblöcke mit einer verbesserten Mischwirkung. Der größere freie Durchgang bleibt aber auch dann erhalten, so daß die verminderte Scherwirkung sichergestellt ist. Insgesamt ist ein Doppelschneckenextruder geschaffen, in dem das zu fördernde Material gut durchmischt und die thermische Belastung wesentlich herabgesetzt werden.

Ausführungsbeispiele des Erfindungsgegenstandes sind in den Zeichnungen dargestellt.

Es zeigen:
Fig. 1 eine schematische Darstellung eines Doppelschneckenextruders nach der Erfindung.
Fig. 2 einen Schnitt durch Fig. 1 längs der Linie II - II in vergrößerter Darstellung.
Fig. 3 und 4 zwei unterschiedliche Ansichten von in der Vorrichtung einsetzbaren Knetblöcken in nochmals vergrößerter Darstellung.
Fig. 5 und 6 Einzelheiten des Knetblocks in unterschiedlichen Ausführungsformen.
Fig. 7 eine gegenüber Fig. 4 geänderte Ausführungsform des Knetblocks.

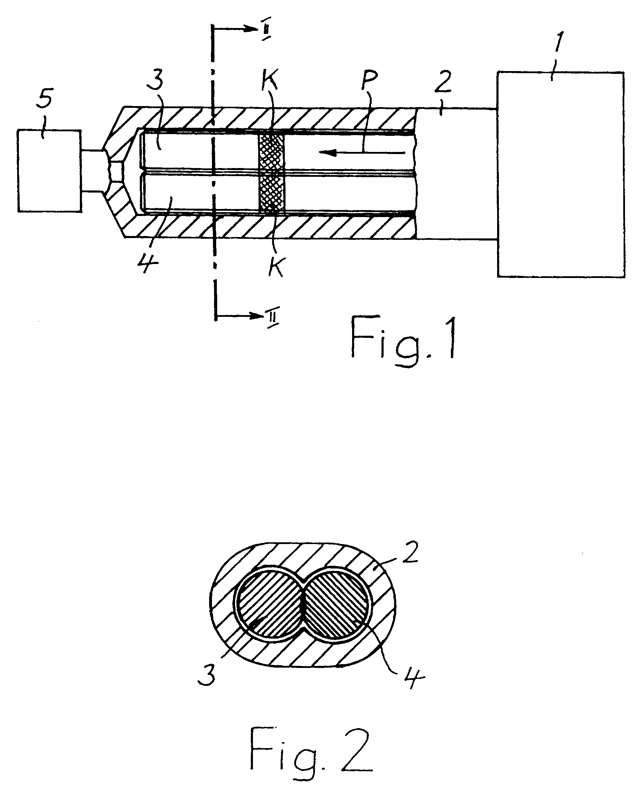

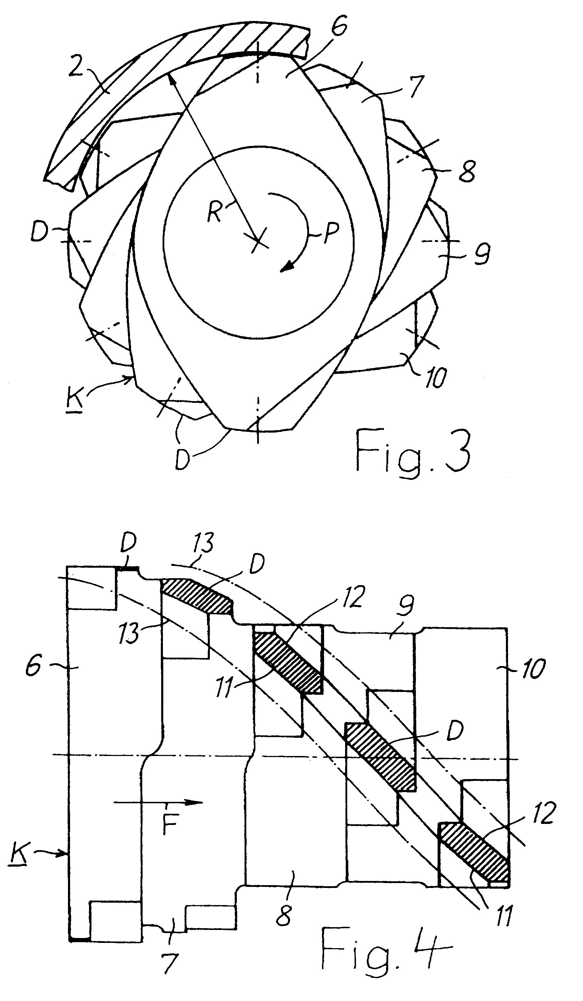

In Fig. 1 ist ein Doppelschneckenextruder 1 - im folgenden kurz "Extruder 1" genannt - schematisch dargestellt, von dem nur die für das Verständnis der Erfindung wichtigen Teile eingezeichnet sind. Im Schneckengehäuse 2 des Extruders 1 sind zwei Schnecken 3 und 4 angeordnet, die von einem nicht dargestellten Antrieb gleichsinnig um ihre Achse gedreht werden. Zur Bearbeitung von in den Extruder 1 eingefülltem Kunststoff durch die miteinander kämmenden und um ihre Achsen drehenden Schnecken 3 und 4 wird der Kunststoff in Richtung des Pfeiles P zum Spritzkopf 5 bewegt. Im Verlauf beider Schnecken 3 und 4 ist an mindestens einer kreuzschraffiert gekennzeichneten Stelle auf gleicher Höhe der beiden Schnecken 3 und 4 je ein Knetblock K angebracht, dessen genauerer Aufbau aus den Fig. 3 bis 7 hervorgeht. Sonstige Teile der Schnecken 3 und 4, wie Förder- und Mischteil, sind grundsätzlich bekannt und daher nicht mit dargestellt.

In Fig. 3 ist eine Stirnansicht eines Knetblocks K dargestellt, der fünf Polygonscheiben 6, 7, 8, 9 und 10 aufweist. Jede der beiden Schnecken 3 und 4 hat in ihrem Verlauf mindestens einen solchen Knetblock K, und zwar jeweils in axial gleicher Höhe. Die beiden Knetblöcke K der beiden Schnecken 3 und 4 kämmen also miteinander. Die Knetblöcke K sind einteilig ausgeführt, wobei die Polygonscheiben 6 bis 10 in denselben ausgeformt sind. Sie sind in Umfangsrichtung gegeneinander versetzt. Im dargestellten Ausführungsbeispiel weist jede der Polygonscheiben 6 bis 10 an zwei einander diametral gegenüberliegenden Seiten eine Dichtfläche D auf. Der Abstand der Dichtflächen D vom Mittelpunkt des Knetblocks K entspricht dem Radius R des Innenraums des Schneckengehäuses 2, das in Fig. 3 ausschnittsweise angedeutet ist. Zwischen dem feststehenden Schneckengehäuse 2 und den sich drehenden Dichtflächen D verbleibt ein verfahrenstechnisch bedingter Spalt.

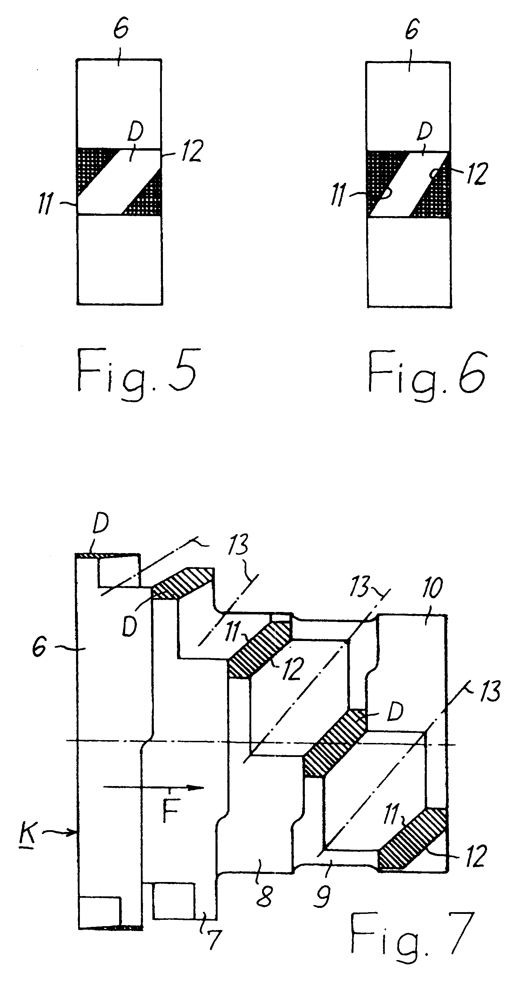

Die Polygonscheiben 6 bis 10 sind, wie insbesondere aus den Fig. 4 und 7 ersichtlich ist, in Umfangsrichtung so gegeneinander versetzt, daß ihre Dichtflächen D auf einer einem Schraubengang entsprechenden Linie liegen. Die Dichtflächen D sind in den Fig. 4 und 7 schraffiert hervorgehoben. Die abgekröpfen Trennlinien zwischen den einzelnen Polygonscheiben 6 bis 10 entstehen bei der Formung des Knetblocks K durch die Übergänge zwischen den einzelnen Polygonscheiben.

Die quer zur Achsrichtung der Schnecken 3 und 4 verlaufenden Kanten 11 und 12 der Dichtflächen D haben zumindest teilweise einen abgeschrägten Verlauf. Das geht beispielsweise aus den Fig. 5 und 6 hervor, in denen jeweils nur die Polygonscheibe 6 dargestellt ist. Die anderen Polygonscheiben 7 bis 10 sind entsprechend gestaltet. Im Bereich der strichpunktierten Linien 13 entstehen durch den Schrägen Verlauf der Kanten 11 und 12 vergrößerte Durchlässe für den Durchtritt des Materials, das mit dem Extruder 1 verarbeitet werden soll. Die Kanten 11 und 12 der Dichtflächen D können gemäß Fig. 5 teilweise senkrecht zur Achsrichtung der Schnecken 3 und 4 und teilweise schräg dazu verlaufen. Sie können gemäß Fig. 6 aber auch auf ihrer ganzen Länge schräg verlaufen. Die in Fig. 5 und 6 kreuzschaffiert dargestellten Flächen werden dazu weggenommen. Sie gehören nicht mehr zu den Dichtflächen D. Diese Flächen sind also nicht mehr vorhanden, sondern sie bilden vergrößerte Durchlässe für das zu fördernde Material. Die beiden Kanten 11 und 12 der Dichtflächen D können in den schrägen Bereichen parallel zueinander verlaufen. Das entspricht der bevorzugten Ausführungsform. Es ist jedoch grundsätzlich auch möglich, die beiden schrägen Kanten 11 und 12 mit unterschiedlicher Schräge verlaufen zu lassen, so daß sie nicht parallel zueinander liegen.

Bei dem Ausführungsbeispiel nach Fig. 4 verläuft die Richtung der schrägen Kanten 11 und 12 der Dichtflächen D so, daß eine zusätzliche Komponente der auf das Material wirkenden Kraft in Förderrichtung auftritt, die durch den Pfeil F angedeutet ist. Diese zusätzliche Komponente gilt für den Fall, daß die Schnecken 3 und 4 und damit auch deren Knetblöcke K gleichsinnig drehen.

Die Richtung der schrägen Kanten 11 und 12 der Dichtflächen D kann gemäß Fig. 7 auch entgegengesetzt zu der nach Fig. 4 verlaufen. Die schrägen Kanten 11 und 12 wirken dann entgegengesetzt zur Förderrichtung (Pfeil F), wenn die Knetblöcke K wie vorher gleichsinnig gedreht werden. Die Durchlässe für das zu fördernde Material bleiben auch hier erhalten, jedoch wird die Mischwirkung vergrößert.

Ein Knetblock K kann selbstverständlich auch mit Polygonscheiben ausgerüstet sein, bei denen die schrägen Kanten 11 und 12 der Dichtflächen D abwechselnd entgegengesetzt gerichtet verlaufen. Es wurden dann abwechselnd Polygonscheiben aus dem Knetblock K nach Fig. 4 und aus dem Knetblock K nach Fig. 7 eingesetzt werden. In Abhängigkeit von der Anzahl der in einem Knetblock K zusammengefaßten Polygonscheiben kann allerdings auch jede andere mögliche Kombination der unterschiedlich verlaufenden schrägen Kanten gewählt werden. Ein Knetblock K soll auf jeden Fall mindestens drei in Umfangsrichtung gegeneinander versetzte Polygonscheiben haben. Er kann allerdings auch mit vier oder mehr als fünf Polygonscheiben ausgerüstet sein.

## Patentansprüche

1. Doppelschneckenextruder mit zwei in einem Schneckengehäuse (2) angeordneten, gleichsinnig drehenden Schnecken (3,4), bei welchem im Verlauf beider Schnecken (3,4) jeweils an der gleichen axialen Stelle mindestens ein aus mindestens drei in Umfangsrichtung gegeneinander versetzten Polygonscheiben (6 bis 10) bestehender Knetblock (K) angebracht ist, dessen Polygonscheiben (6 bis 10) an zwei einander diametral gegenüberliegenden Positionen mit einem dem Innendurchmesser des Schneckengehäuses (2) entsprechenden Durchmesser Dichtflächen (D) aufweisen, die sich in Umfangsrichtung der Polygonscheiben (6 bis 10) erstrecken und durch zur Achsrichtung der Schnecken (3,4) parallele Linien begrenzt sind, und bei welchem die Durchlaßöffnung zwischen zwei Polygonscheiben (6 bis 10) der kämmenden Knetblöcke durch einen Werkstoffabtrag an mindestens einer der Polygonscheiben (6 bis 10) mit dadurch bedingter Verkleinerung der Oberfläche der jeweiligen Dichtfläche (D) vergrößert ist, dadurch gekennzeichnet, daß die quer zur Achsrichtung der Schnecken (3,4) verlaufenden Kanten (11,12) jeder der durch die zur Achsrichtung der Schnecken (3,4) parallelen Linien begrenzten Dichtflächen (D) bedingt durch den Werkstoffabtrag zumindest teilweise schräg zur Achse der Schnecken (3,4) verlaufen, wobei die Dichtflächen (D) sich jeweils von der zuströmseitigen Stirnfläche der Polygonscheiben (6 bis 10) bis zu deren abströmseitiger Stirnfläche erstrecken.

2. Doppelschneckenextruder nach Anspruch 1, dadurch gekennzeichnet, daß die beiden schrägen Kanten (11,12) jeder Dichtfläche (D) parallel zueinander verlaufen.

3. Doppelschneckenextruder nach Anspruch 1, dadurch gekennzeichnet, daß die beiden schrägen Kanten (11,12) jeder Dichtfläche (D) mit unterschiedlicher Schräge verlaufen, so daß sie nicht parallel zueinander liegen.

4. Doppelschneckenextruder nach einem der Ansprüche 1 bis 3, dadurch gekennzeichnet, daß die Wirkung der schrägen Kanten (11,12) in Förderrichtung gerichtet ist.

5. Doppelschneckenextruder nach einem der Ansprüche 1 bis 3, dadurch gekennzeichnet, daß die Wirkung der schrägen Kanten (11,12) entgegengesetzt zur Förderrichtung gerichtet ist.

6. Doppelschneckenextruder nach einem der Ansprüche 1 bis 3, dadurch gekennzeichnet, daß in den Knetblöcken (K) abwechselnd Polygonscheiben (6 bis 10) mit in unterschiedlicher Richtung verlaufenden schrägen Kanten (11,12) der Dichtflächen (D) eingesetzt sind.

## Claims

1. Twin-screw extruder with two screws (3,4) which are disposed in a screw housing (2) and rotate in the same direction, in which in the course of both screws (3,4) there is mounted in each case at the same axial position at least one kneading block (K) consisting of at least three polygonal discs (6 to 10) offset in the peripheral direction with respect to one another, the polygonal discs (6 to 10) of which have at two diametrically opposed positions with a diameter corresponding to the internal diameter of the screw housing (2) sealing surfaces (D), which extend in peripheral direction and which are limited by lines that are parallel to the axis of the screws (3,4), and in which the opening between two polygonal discs (6 to 10) of the meshing kneading blocks (K) is enlarged by removing of the material of at least one of the polygonal discs (6 to 10) with a simultaneous decrease of the surface of the respective sealing surface (D), **characterised in** that the edges (11,12) of each of the sealing surfaces (D), which extend transversely with respect to the axial direction of the screws (3,4) and which are limited by the parallel lines, extend - subject to the removal of material - at least partially at an angle to the axis of the screws (3,4), whereby the sealing surfaces (D) respectively extend from one front surface of the polygonal discs (6 to 10) to the opposite front surface.

2. Twin-screw extruder according to Claim 1, characterised in that the two inclined edges (11, 12) of each sealing surface (D) extend parallel to one another.

3. Twin-screw extruder according to Claim 1, characterised in that the two inclined edges (11, 12) of each sealing surface (D) extend at different inclinations, so that they do not lie parallel to one another.

4. Twin-screw extruder according to one of Claims 1 to 3, characterised in that the action of the inclined edges (11, 12) is directed in the direction of conveying.

5. Twin-screw extruder according to one of Claims 1 to 3, characterised in that the action of the inclined edges (11, 12) is directed against the direction of conveying.

6. Twin-screw extruder according to one of Claims 1 to 3, characterised in that polygonal discs (6 to 10) with inclined edges (11, 12) of the sealing surfaces (D) extending in different directions are used alternately in the kneading blocks (K).

## Revendications

1. Extrudeuse à deux vis comportant deux vis (3,4) tournant dans le même sens, montées dans un carter (2), dans laquelle, sur le parcours de chacune des deux vis (3,4) il est fixé, au même point axial, au moins un bloc de pétrissage (K) constitué d'au moins trois disques polygonaux (6 à 10) décalés l'un par rapport à l'autre dans la direction périphérique, dont les disques polygonaux (6 à 10) présentent, en deux positions diamétralement opposées, des surfaces d'étanchéité (D) d'un diamètre correspondant au diamètre intérieur du carter (2) des vis, qui s'étendent dans la direction périphérique et qui sont limitées par des lignes qui sont parallèles à l'axe des vis (3,4), et dans laquelle le passage entre deux disques polygonaux peignants (6 à 10) des blocs de pétrissage (K) est agrandi par déblai de matière d'au moins un disque polygonal (6 à 10) avec réduction simultanée de la surface de la surface d'étanchéité (D) correspondante, **caractérisée en** ce que les bords (11,12) de chaque surface d'étanchéité (D) qui est limitée par les lignes parallèles, s'étendant transversalement à la direction axiale des vis (3,4), s'étendent - consécutif au déblai de matière - au moins partiellement en biais par rapport à l'axe des vis (3,4), à quoi les surfaces d'étanchéité (D) s'étendent de la surface extérieure des disques polygonaux (6 à 10) à la surface extérieure en face.

2. Extrudeuse à deux vis selon la revendication 1, caractérisée en ce que les deux bords (11, 12) obliques de chaque surface d'étanchéité (D) sont parallèles entre eux.

3. Extrudeuse à deux vis selon la revendication 1, caractérisée en ce que les deux bords (11, 12) obliques de chaque surface d'étanchéité (D) ont une inclinaison différente, de sorte qu'ils ne sont pas parallèles entre eux.

4. Extrudeuse à deux vis selon l'une des revendications 1 à 3, caractérisée en ce que l'effet des bords (11, 12) obliques est orienté dans la direction de transport.

5. Extrudeuse à deux vis selon l'une des revendications 1 à 3, caractérisée en ce que l'effet des bords (11, 12) obliques est dirigé à l'opposé de la direction de transport.

6. Extrudeuse à deux vis selon l'une des revendications 1 à 3, caractérisée en ce que dans les blocs de pétrissage (4) sont montés alternativement des disques polygonaux (6 à 10) avec des bords obliques (11, 12) des surfaces d'étanchéité (D), s'étendant dans une direction différente.
